# EUROPÄISCHE PATENTSCHRIFT

(11) **EP 0 712 696 B1**
(45) Veröffentlichungstag und Bekanntmachung des Hinweises auf die Patenterteilung: **07.01.1999**
(21) Anmeldenummer: 95810595.9
(22) Anmeldetag: 21.09.1995
(51) Int. Cl.: B25F 5/00, F16P 3/00

(54) **Presswerkzeug**
Press tool
Outil de pressage

(30) Priorität: 16.11.1994 CH 3432/94
(43) Veröffentlichungstag der Anmeldung: 22.05.1996
(73) Patentinhaber: Von Arx AG, 4450 Sissach (CH)
(72) Erfinder: Dummermuth, Paul, CH-4455 Zunzgen (CH)
(74) Vertreter: Feldmann, Clarence Paul

(56) Entgegenhaltungen:
- DE-U- 8 711 266
- GB-A- 1 559 966
- US-A- 5 040 400
- US-A- 5 125 324

## Beschreibung

Die vorliegende Erfindung betrifft ein Presswerkzeug für Kopplungselemente mit einer gabelförmigen Aufnahme, einer in dieser Aufnahme mittels eines Verbindungsbolzens auswechselbar gehaltenen Klemmzange und einem Antriebsmotor zur Betätigung der Klemmzange, wobei der Verbindungsbolzen durch Bohrungen in der gabelförmigen Aufnahme und der Klemmzange schiebbar ist.

Ein solches Presswerkzeug ist z.B aus der US-A-5125324 bekannt.

Es sind Presswerkzeuge bekannt, mittels denen Kopplungselemente zusammengepresst und so zwei Teile miteinander verbunden werden. Bekannte zylinderförmige Kopplungselemente sind beispielsweise Presshülsen, Pressfittinge oder Rohrmuffen, aber auch Rohrabschnitte, die ineinandergeschoben und aufeinandergepresst werden können. Diese Presswerkzeuge sind meist pistolenförmig aufgebaut und weisen eine Klemmzange auf. Diese Klemmzange umschliesst ein zu pressendes Kopplungselement. Bei Betätigung des Presswerkzeuges wird nun die Klemmzange zusammengedrückt, die wiederum das Kopplungselement zusammenpresst. Damit verschiedene Durchmesser von Kopplungselementen mit demselben Presswerkzeug verarbeitet werden können, ist dieses so ausgestaltet, dass entsprechend dimensionierte Klemmzangen einfach ausgewechselt werden können.

Das Presswerkzeug weist deshalb eine gabelförmige Aufnahme auf, in der die Klemmzange mittels einem Verbindungsbolzen auswechselbar gehalten ist. Die gabelförmige Aufnahme und die Klemmzange weisen hierfür Bohrungen auf, durch die der Verbindungsbolzen eingeschoben wird.

Derartige Presswerkzeuge sind jedoch Arbeitsgeräte, die ein erhöhtes Unfallrisiko aufweisen. Es sind bereits mehrere Arbeitsunfälle vorgekommen, bei denen die Klemmzange unkontrolliert weggeschleudert wurde und die gabelförmige Aufnahme gespreizt und deformiert wurde. Des weiteren weisen diese Presswerkzeuge eine erhöhte Anzahl von unkorrekten Verpressungen auf. Diese Schadenfälle oder Unfälle geschahen sowohl bei den elektrisch/mechanisch wie auch bei den elektrisch/hydraulisch betriebenen Presswerkzeugen. Die genaue Ursache dieser Unfälle war nicht bekannt. Es wurde angenommen, dass Materialermüdung, Herstellungstoleranzen und Schwankungen im Antrieb wesentliche Faktoren sind, die sich gegenseitig aufsummieren.

Es ist deshalb Aufgabe der Erfindung, ein Presswerkzeug für Kopplungselemente der eingangs genannten Art zu schaffen, das eine verbesserte Betriebssicherheit gewährleistet.

Diese Aufgabe löst ein Presswerkzeug für Kopplungselemente gemäss Oberbegriff des Patentanspruches 1, das dadurch gekennzeichnet ist, dass ein Ueberwachungselement vorhanden ist, das den Verbindungsbolzen in seiner vollständig eingeschobenen Lage überwacht und das über ein Schaltelement mit dem Antriebsmotor in Wirkverbindung steht.

In einer bevorzugten Ausführungsform ist der Verbindungsbolzen richtungsabhängig einschiebbar, wobei das Ueberwachungselement auf dem austrittseitigen Bereich angeordnet ist.

Weitere bevorzugte Ausführungsformen gehen aus den weiteren abhängigen Patentansprüchen hervor.

Die Anmelderin hat festgestellt, dass die Hauptursache der oben erwähnten Schadenfälle darin liegt, dass der Verbindungsbolzen nicht vollständig oder nicht korrekt in die gabelförmige Aufnahme eingeschoben worden ist. Dadurch können die beim Pressen entstehenden Querkräfte dazu führen, dass die gabelförmige Aufnahme gespreizt wird, so dass sich die Klemmzange aus ihrer Fixierung lösen kann. Diese Erkenntnis führte zu der erfindungsgemässen Lösung, nämlich dass die korrekte Lage des Verbindungsbolzens überwacht und diese Ueberwachung mit dem Antrieb des Presswerkzeuges gekoppelt wird. Obwohl die Lösung in der Rückschau einfach erscheint, ist sie doch nicht offensichtlich, befriedigt sie doch ein lange währendes Bedürfnis.

Es sind zwar Presswerkzeuge für zylinderförmige Kopplungselemente bekannt, bei denen der eingeschobene Verbindungsbolzen durch ein Sicherungselement, meist durch einen Splint, fixiert ist. Dieser Splint dient jedoch lediglich zur Fixierung des Bolzens und nicht als Ueberwachungselement. Das Presswerkzeug ist auch ohne diese Sicherung betriebsfähig, so dass keine echte Erhöhung der Betriebssicherheit vorhanden ist. Eine direkte Verbindung zwischen Betriebstauglichkeit und Vorhandensein des Verbindungsbolzens wurde nicht hergestellt.

Da ohnehin bei dieser Art Arbeit unter Zeitdruck gearbeitet wird und die Zangen relativ häufig gewechselt werden müssen, wurden die Splinte oft nicht verwendet, obwohl dies aus Gründen der Haftung behauptet wurde.

In den beiliegenden Zeichnungen sind Ausführungsbeispiele des Erfindungsgegenstandes dargestellt und in der nachfolgenden Beschreibung erläutert. Es zeigen
- Figur 1: eine perspektivische Darstellung eines Presswerkzeuges gemäss der Erfindung;
- Figur 2: einen Querschnitt durch einen Teil eines Presswerkzeuges gemäss einer Ausführungsform der Erfindung;
- Figur 3: einen Querschnitt durch einen Teil eines Presswerkzeuges gemäss einer weiteren Ausführungsform.

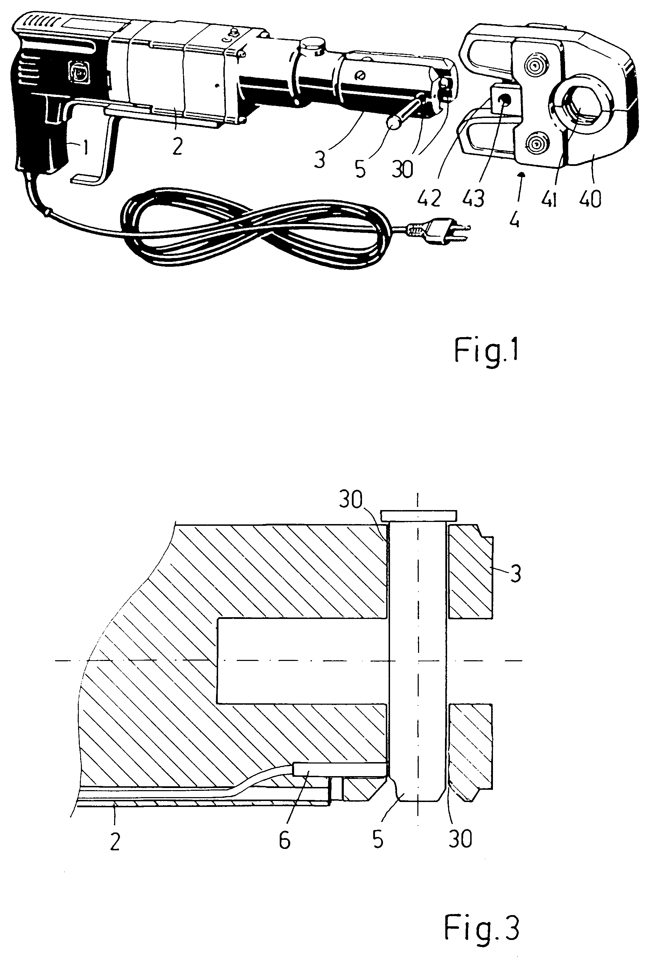

In Figur 1 ist ein Presswerkzeug für zylinderförmige Kopplungselemente in einer perspektivischen Darstellung gezeigt. Es ist pistolenförmig gestaltet, wobei das Gehäuse 2 einen Griff 1 aufweist und in seiner Längsrichtung in einer gabelförmigen Aufnahme 3 endet. In dieser gabelförmigen Aufnahme 3 ist eine auswechselbare Klemmzange 4 mit zwei Klemmbacken 40 lösbar befestigt. Die Klemmbacken 40 bilden gemeinsam eine kreisförmige Oeffnung 41, entsprechend dem Durchmesser des zu pressenden Kopplungselementes, wobei diese dem Gehäuse 2 abgewandt ist. Auf der dem Gehäuse 2 zugewandten Seite weist die Klemmzange 4 eine Zuglasche 42 auf, die von einer senkrecht zur Längsrichtung des Gehäuses 2 verlaufenden Bohrung 43 durchsetzt ist. Diese Zuglasche 42 wird im montierten Zustand von der gabelförmigen Aufnahme 3 umfangen. Die gabelförmige Aufnahme 3 weist auf beiden Seiten je eine Bohrung 30 auf, die mit derjenigen der Zuglasche 42 fluchten. Ein Verbindungsbolzen 5 ist durch diese Bohrungen einschiebbar und fixiert so die Klemmzange 4 im Gehäuse 2. Ein im Gehäuse 2 gelagerter, hier nicht sichtbare Antrieb wirkt über eine Kolbenstange oder Spindel auf die Klemmzange 4, so dass eine Pressung ausgeführt werden kann.

Die vollständig eingeschobene Lage des Verbindungsbolzens 5 wird durch mindestens ein Ueberwachungselement überwacht, das im Gehäuse 2 des Presswerkzeuges angeordnet ist. Dieses Ueberwachungselement steht über ein Schaltelement mit dem Antriebsmotor des Presswerkzeuges in Wirkverbindung. Der Antriebsmotor kann nur dann in Betrieb genommen werden, wenn das Ueberwachungselement festgestellt hat, dass der Verbindungsbolzen 5 korrekt und vollständig eingeschoben ist. Sollte sich zudem während des Betriebes des Presswerkzeuges der Verbindungsbolzen lockern, so wird dies vom Ueberwachungselement registriert und der Antriebsmotor wird mittels des Schaltelementes abgeschaltet.

Der Verbindungsbolzen ist bevorzugterweise richtungsabhängig einschiebbar, wobei das Ueberwachungselement im austrittseitigen Bereich der durch die Bohrungen definierten Einschuböffnung angeordnet ist. Dadurch wird gewährleistet, dass das Schaltelement lediglich dann betätigt wird, wenn der Verbindungsbolzen korrekt eingeschoben ist.

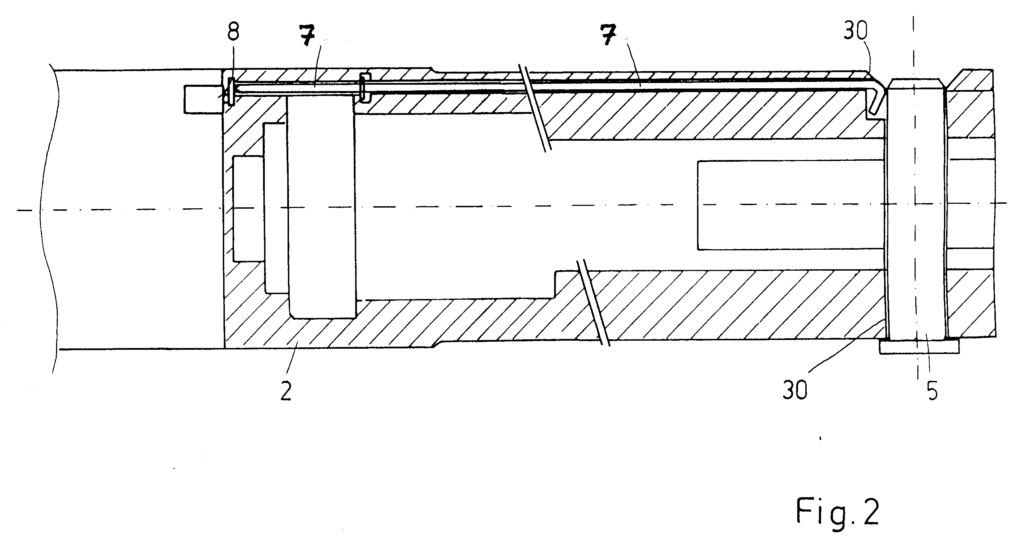

In Figur 2 ist ein bevorzugtes Ausführungsbeispiel eines derartigen Ueberwachungselementes in Form eines Ueberwachungsstiftes 7 und ein Schaltelement in Form eines Mikroschalters 8 dargestellt. Im Gehäuse 2 des Presswerkzeuges ist im Bereich einer Bohrung 30 der Ueberwachungsstift 7 angeordnet. Er verläuft parallel zum Gehäuse 2 über mindestens die Distanz der gabelförmigen Aufnahme 3, bevorzugterweise jedoch bis zum Antriebmotor. Der Ueberwachungsstift 7 ist gefedert gehalten, wobei sich sein vorderes Ende bis in den Bereich einer Bohrung 30 der gabelförmigen Aufnahme 3 erstreckt. Im Bereich seines hinteren Endes ist der Mikroschalter 8 angeordnet, der mit dem Antriebsmotor gekoppelt ist. Wird der Verbindungsbolzen 5 in die Bohrungen eingeschoben, so drückt er den gefederten Ueberwachungsstift 7 entgegen der Kraft einer Rückstellfeder nach hinten, so dass dieser den Mikroschalter 8 betätigt. Wird der Verbindungsbolzen 5 gar nicht oder nur teilweise eingeschoben, so löst sich der Ueberwachungsstift 7 durch die Federkraft vom Mikroschalter 8 und der Antriebsmotor wird gesperrt. Auch wenn sich der Verbindungsbolzen 7 während des Betriebes des Presswerkzeuges lösen sollte, so wird das Gerät abgeschaltet. Das vordere Ende des Ueberwachungsstiftes 7 ist in diesem Beispiel abgewinkelt, wobei der abgewinkelte Teil nach innen ragt und gegenüber der Achse des Verbindungsbolzens einen Winkel leicht grösser als 90° einschliesst. Durch diese Abwinklung wird erreicht, dass der Verbindungsbolzen nur in einer Richtung ohne Kraftanwendung einschiebbar ist. Der korrekt von der dem Ueberwachungsstift gegenüberliegenden Seite eingeschobene Verbindungsbolzen gleitet am abgewinkelten Ende vorbei und stösst den Stift zurück. Wird er von der falschen Seite her eingeschoben, bildet der Ueberwachungsstift eine Sperre. Dadurch wird verhindert, dass ein lediglich teilweise eingeschobener Verbindungsbolzen bereits den Antrieb freigibt.

In diesem Beispiel wurde ein Ueberwachungselement in Form eines Uebertragungsstiftes eingesetzt, das die Information der Lage des Verbindungsbolzens 5 an den entfernten Mikroschalter übermittelt. Diese Anordnung wurde gewählt, damit einerseits der Mikroschalter im Bereich der übrigen Elektronik, also im hinteren Bereich des Gehäuses, angeordnet ist. Des weiteren könnten je nach Anwendungsbereich die im Bereich der Klemmzange und der gabelförmigen Aufnahme entstehenden Vibrationen die Funktionsfähigkeit des Mikroschalters beeinträchtigen. Durch den Uebertragungsstift und die im hinteren Bereich angeordnete Rückstellfeder werden diese Vibrationen und Schläge gedämpft, so dass die Störungsanfälligkeit des Ueberwachungssystems minimiert ist.

In Figur 3 ist ein weiteres Ausführungsbeispiel des erfindungsgemässen Presswerkzeuges dargestellt. Das Ueberwachungselement befindet sich direkt im Bereich einer der Bohrungen 30 der gabelförmigen Aufnahme 3. Dieses Ueberwachungselement ist ein Schaltelement, das beispielsweise durch einen hier dargestellten Näherungsschalter 6 oder durch ein anderes Schaltelement, wie z.B. ein optischer Sensor, gebildet ist. Die elektrische Verbindung zum Antrieb verläuft parallel zum und entlang des Gehäuses 2. Das Ueberwachungselement wird wiederum betätigt, wenn der Verbindungsbolzen 5 korrekt eingeschoben ist. Der Verbindungsbolzen 5 weist in dieser Ausführungsform am unteren Ende eine Abschrägung auf, die am Mikroschalter 6 entlanggleitet, so dass dieser erst betätigt wird, wenn der Verbindungsbolzen 5 vollständig eingeschoben ist.

In einer weiteren, hier nicht dargestellten Ausführungsform wird die richtungsabhängige Einschiebbarkeit des Verbindungsbolzens dadurch erreicht, dass der Verbindungsbolzen und die Bohrungen speziell geformt sind. Bevorzugterweise ist der Verbindungsbolzen konisch gestaltet, wobei mindestens auch die zwei Bohrungen der gabelförmigen Aufnahme entsprechend unterschiedliche Durchmesser aufweisen. Dadurch kann der Verbindungsbolzen lediglich von einer Seite eingeschoben werden. Auch andere nicht unbedingt symmetrische Querschnittsformen sind möglich.

## Patentansprüche

1. Presswerkzeug für Kopplungselemente mit einer gabelförmigen Aufnahme (3), einer in dieser Aufnahme (3) mittels eines Verbindungsbolzens (5) auswechselbar gehaltenen Klemmzange (4) und einem Antriebsmotor zur Betätigung der Klemmzange (4), wobei der Verbindungsbolzen (5) durch Bohrungen (30,43) in der gabelförmigen Aufnahme (3) und der Klemmzange (4) schiebbar ist, dadurch gekennzeichnet,
dass ein Ueberwachungselement (6,7) vorhanden ist, das den Verbindungsbolzen (5) in seiner vollständig eingeschobenen Lage überwacht und das über ein Schaltelement (7,8) mit dem Antriebsmotor in Wirkverbindung steht.

2. Presswerkzeug nach Anspruch 1, dadurch gekennzeichnet, dass der Verbindungsbolzen (5) richtungsabhängig einschiebbar ist und dass das Ueberwachungselement (6,7) im austrittseitigen Bereich der durch die Bohrungen (30) der gabelförmigen Aufnahme (3) definierten Einschuböffnung angeordnet ist.

3. Presswerkzeug nach Anspruch 1, dadurch gekennzeichnet, dass das Schaltelement einen Mikroschalter (8) umfasst und das Ueberwachungselement aus einem den Mikroschalter (8) betätigbaren Uebertragungsstift (7) besteht, dass der Uebertragungsstift (7) parallel zum Gehäuse (2) des Presswerkzeuges verläuft und gefedert darin gehalten ist, dass der Mikroschalter (8) im Bereich des hinteren Endes des Ueberwachungsstiftes (7) angeordnet ist und dass sich das vordere Ende des Uebertragungsstiftes (7) bis in den Bereich einer Bohrung (30) der gabelförmigen Aufnahme (3) erstreckt, so dass der Ueberwachungsstift (7) durch den vollständig eingeschobenen Verbindungsbolzen (5) entgegen der Kraft einer Rückzugsfeder zum Mikroschalter (8) hin veschiebbar ist.

4. Presswerkzeug nach den Ansprüchen 2 und 3, dadurch gekennzeichnet, dass das vordere Ende des Ueberwachungsstiftes (7) zur Mittelachse des Gehäuses (2) hin abgewinkelt ist, wobei es einen spitzen Winkel bildet.

5. Presswerkzeug nach Anspruch 1, dadurch gekennzeichnet, dass das Ueberwachungselement ein Schaltelement (6) ist, das im Bereich einer Bohrung (30) der gabelförmigen Aufnahme (3) angeordnet ist.

6. Presswerkzeug nach Anspruch 5, dadurch gekennzeichnet, dass das Uebertragungselement ein berührungsfreies Schaltelement ist.

7. Presswerkzeug nach den Ansprüchen 2 und 5, dadurch gekennzeichnet, dass das Ueberwachungselement ein Näherungsschalter (6) ist, der durch den Verbindungsbolzen (5) betätigbar ist, und dass der Verbindungsbolzen (5) zur richtungsabhängigen Einführung an dem austrittseitigen Ende eine Abschrägung (50) aufweist.

8. Presswerkzeug nach Anspruch 2, dadurch gekennzeichnet, dass der Verbindungsbolzen (5) konisch geformt ist und die Bohrungen entsprechend unterschiedliche Durchmesser aufweisen.

## Claims

1. A pressing tool for coupling elements, with a fork-shaped receiver (3), with a vise-grip wrench (4) which is exchangeably held in this receiver (3) by way of a connection bolt (5) and with a drive motor for actuating the vise-grip wrench (4), wherein the connection bolt (5) is slidable through bores (30, 43) in the fork-shaped receiver (3) and in the vise-grip wrench, characterised in that a monitoring element (6, 7) is present which monitors the connection bolt (5) in its completely inserted position and which is in operating connection with the drive motor via a switch element (7, 8).

2. A pressing tool according to claim 1, characterised in that the connection bolt (5) is insertable depending on direction and that the monitoring element (6, 7) is arranged in the exit-side region of the insertion opening defined by the bores (30) of the fork-shaped receiver (3).

3. A pressing tool according to claim 1, characterised in that the switch element comprises a microswitch (8) and the monitoring element consists of a transmission pin (7) able to actuate the microswitch (8), that the transmission pin (7) runs parallel to the housing (2) of the pressing tool and is resiliently mounted therein, that the microswitch (8) is arranged in the region of the rear end of the monitoring pin (7) and that the front end of the transmission pin (7) reaches to into the region of a bore (30) of the fork-shaped receiver (3), so that the monitoring pin (7) is displaceable towards the microswitch (8) against the force of a return spring by way of the completely inserted connection bolt (5).

4. A pressing tool according to the claims 2 and 3, characterised in that the front end of the monitoring pin (7) is bent towards the centre axis ofthe housing (2), wherein it forms an acute angle.

5. A pressing tool according to claim 1, characterised in that the monitoring element is a switch element (6) which is arranged in the region of a bore (30) of the fork-shaped receiver (3).

6. A pressing tool according to claim 5, characterised in that the transmission element is a touch-free switch element.

7. A pressing tool according to the claims 2 and 5, characterised in that the monitoring element is a proximity switch (6) which can be actuated by the connection bolt (5), and that the connection bolt (5) for the direction-dependent introduction comprises a chamfer (50) at the exit-side end.

8. A pressing tool according to claim 2, characterised in that the connection bolt (5) is shaped conically and the bores have correspondingly different diameters.

## Revendications

1. Outil de pressage pour éléments de couplage comportant un dispositif récepteur (3) en forme de fourche, une pince de serrage (4) maintenue de façon amovible dans ce dispositif (3) au moyen d'une broche (5) de liaison, et un moteur d' entraînement pour actionner la pince de serrage (4), la broche de liaison (5) étant coulissante, grâce à des alésages (30, 43), dans le dispositif récepteur (3) en forme de fourche et dans la pince de serrage (4), caractérisé en ce qu'on prévoit un élément de contrôle (6, 7) qui contrôle que la broche de liaison (5) est dans son état d' insertion complète et qui est en liaison fonctionnelle avec le roteur d' entraînement par l'intermédiaire d'un élément de commutation (7, 8).

2. Outil de pressage selon la revendication 1, caractérisé en ce que la broche de liaison (5) présente un sens d'insertion et en ce que l'élément de contrôle (6, 7) est disposé dans la zone antérieure de l'ouverture d<insertion définie par les alésages (30) du dispositif récepteur (3) en forme de fourche.

3. Outil de pressage selon la revendication 1, caractérisé en ce que l'élément de commutation comporte un micro-commutateur (8) et en ce que l' élément de contrôle consiste en une tige de transmission (7) actionnée par le micro-commutateur (8), en ce que la tige de transmission (7) s'étend parallèlement au boîtier (2) de l'outil de pressage et y est maintenue par effet de ressort, en ce que le micro-commutateur (8) est disposé dans la zone de l'extrémité arrière de la tige de contrôle (7), et en ce que l'extrémité antérieure de la tige de transmission (7) s'étend jusque dans la zone d'un alésage (30) du dispositif récepteur (3) en forme de fourche, de sorte que la tige de contrôle (7) soit déplaçaole, sous l'action de la force d'un ressort en retrait, vers le micro-commutateur (8), quand la broche de liaison (5) est complètement insérée.

4. Outil de pressage selon les revendications 2 et 3, caractérisé en ce que l'extrémité antérieure de la tige de contrôle (7) est coudée vers l'axe médian du boîtier (2) et forme un angle aigu avec ce dernier.

5. Outil de pressage selon la revendication 1, caractérisé en ce que l' élément de contrôle est un élément de commutation (6) qui est disposé dans la zone d'un alésage (30) du dispositif récepteur (3) en forme de fourche.

6. Outil de pressage selon la revendication 5, caractérisé en ce que l'élément de transmission est un élément de commutation sans contact.

7. Outil de pressage selon les revendications 2 et 5, caractérisé en ce que l'élément de contrôle est un commutateur de proximité (6) qui est actionnable par la broche de liaison (5) et en ce que la broche de liaison (5) présente, pour une introduction dépendant du sens, un biseau (50) du côté de son extrémité antérieure.

8. Outil de pressage selon la revendication 2, caractérisé en ce que la broche de liaison (5) est formée de façon conique et en ce que les alésages présentent des sections différentes correspondantes.
